# EUROPEAN PATENT APPLICATION

(11) **EP 2 626 596 A1**
(43) Date of publication of application: **14.08.2013**
(21) Application number: 10858141.4
(22) Date of filing: 08.10.2010
(51) Int. Cl.: F16H 61/00

(54) **HYDRAULIC CONTROL DEVICE FOR WINDING TRANSMISSION DEVICE**

(71) Applicant: Toyota Jidosha Kabushiki Kaisha, Aichi 471-8571 (JP)
(72) Inventor: HATTORI, Yuji, Toyota-shi Aichi 471-8571 (JP); INAGAWA, Tomokazu, Toyota-shi Aichi 471-8571 (JP); MORIYAMA, Shuji, Toyota-shi Aichi 471-8571 (JP); KIMURA, Kenta, Toyota-shi Aichi 471-8571 (JP); INAGAKI, Takafumi, Toyota-shi Aichi 471-8571 (JP)
(74) Representative: TBK
(86) International application number: PCT/JP2010/067717
(87) International publication number: WO 2012/046335

(57) **Abstract**

A hydraulic control system adapted to carry out a speed change in case of rotating a wrapping transmission under the situation where solenoid valves for controlling a pressure in a hydraulic chamber cannot be energized.

A pair of pulleys 19 and 20 is individually provided with hydraulic chambers 19 and 20 to vary a width of a groove holding a belt 21. Those hydraulic chambers are connected with a hydraulic source through electrically controlled feeding control valves SP1 and SS1, and also connected with drain portions through electrically controlled relief control valve SP2 and SS2. The hydraulic control system comprises a communicating passage connecting the hydraulic chambers, and the hydraulic control system disconnects the hydraulic chambers from the hydraulic source and the drain portions in case none of the feeding control valves and the relief control valves can be energized.

## Description

### TECHNICAL FIELD

This invention relates to a wrapping transmission for varying a speed ratio by changing a groove width of rotary members such as a drive pulley and a driven pulley to change a running radius of a transmission member such as a belt and a chain applied to those pulleys, and especially to a system for controlling a hydraulic pressure applied to the rotary member.

### BACKGROUND ART

The transmission of this kind varies a speed ratio according to a running radius of a belt, chain and etc. For example, a belt driven continuously variable transmission varies a speed ratio between a drive pulley and a driven pulley by varying a running radius of a belt applied to those pulleys. Specifically, in the belt driven continuously variable transmission used in an automobile, a V-groove is formed in each pulley, and the speed ratio is varied by changing a groove width hydraulically thereby varying a running radius of the belt in the V-groove. That is, the belt driven continuously variable transmission of this kind is adapted to transmit a torque by a friction force between the belt and each pulley. For this purpose, a clamping force for clamping the belt by the pulley is controlled according to the transmission torque.

Examples of the belt driven continuously variable transmission are disclosed in the European Patent No. EP0985855 and an international publication W02010/021218. According to the belt driven continuously variable transmissions taught by European Patent No. EP0985855 and the international publication WO2010/021218, a drive pulley (as will be called a primary pulley hereinafter) comprises a fixed sheave fixed with a pulley shaft and a movable sheave fitted onto the pulley shaft. The movable sheave is allowed to move close to the fixed sheave and away from the fixed sheave, and provided with a hydraulic chamber on its back face. Therefore, a running radius of the belt can be increased by narrowing the width of the V-groove between the sheaves by feeding operating oil to the hydraulic chamber, and the running radius of the belt can be reduced by widening the width of the V-groove by discharging the operating oil from the hydraulic chamber. As the primary pulley, a driven pulley (as will be called a secondary pulley hereinafter) also comprises a fixed sheave fixed with a pulley shaft and a movable sheave fitted onto the pulley shaft. Therefore, a required transmission torque can be achieved by establishing a clamping force to clamp the belt by the sheaves by controlling the oil pressure applied to the hydraulic chamber arranged on the back face of the movable sheave. A hydraulic source comprises a hydraulic pump and an accumulator. A supply-side control valve is arranged on an oil feeding passage connecting the hydraulic source and the hydraulic chamber of each pulley, and a drain-side valve is connected with each hydraulic chambers.

Specifically, in case of reducing a speed ratio toward a high-speed side or in case of increasing the clamping force, the operating oil is supplied to the hydraulic chambers of the primary pulley and to the secondary pulley by opening the supply-side control valve. To the contrary, in case of increasing the speed ratio toward a low-speed side or in case of reducing the clamping force, the operating oil is discharged from the hydraulic chambers of the primary pulley and the secondary pulley by opening the drain-side control valve. According to the teachings of European Patent No. EP0985855, two-way electromagnetic valves are used in the hydraulic control system. Each electromagnetic valve is adapted to be opened to communicate an input port and an output port by energizing a solenoid, and to be closed to disconnect the input port and the output port by an elastic force of a spring or the like. Meanwhile, according to the teachings of the international publication WO2010/021218, poppet type electromagnetic valves are used in the hydraulic control system. The poppet valve used therein is adapted to be opened by energizing a solenoid to isolate a valve element from a valve seat, and to be closed by interrupting the electric supply to the solenoid thereby allowing a spring to push the valve element onto the valve seat.

Thus, according to the hydraulic control systems taught by the European Patent No. EP0985855 and the international publication WO2010/021218, a feeding and a draining of the operating oil to/from the hydraulic chamber of the primary pulley is halted by interrupting the electric supply to the control valves of the primary pulley side, that is, by carrying out an "OFF" control. In this situation, therefore, the operating oil is confined in the hydraulic chamber of the primary pulley so that the current speed ratio is maintained. Likewise, a feeding and a draining of the operating oil to/from the hydraulic chamber of the secondary pulley is halted by interrupting the electric supply to the control valves of the secondary pulley side, that is, by carrying out an "OFF" control. In this situation, therefore, the operating oil is confined in the hydraulic chamber of the secondary pulley so that the current clamping pressure is maintained. However, the belt driven continuously variable transmission is not allowed to change the running radius of the belt if the pulleys are not rotated. Therefore, in case of stopping the vehicle on which the continuously variable transmission is mounted, the sped ratio is increased to the maximum ratio of the lowest speed side or almost maximum ratio.

That is, in case of towing the vehicle under the situation in which a failure occurs on an electrical system including an electronic control unit for the conventional hydraulic control system as taught by the European Patent No. EP0985855 or the international publication WO2010/021218, the belt driven continuously variable transmission has to be rotated while keeping the maximum speed ratio of the lowest speed side. In this case, since the speed ratio is thus kept to the maximum ratio, an input side of the continuously variable transmission has to be rotated at high speed even if the vehicle is moved at low speed so that an output side of the continuously variable transmission is rotated at low speed. Therefore, provided that a torque reversing mechanism is connected with the input side of the continuously variable transmission, any of rotary members of the torque reversing mechanism may be rotated at high speed.

### DISCLOSURE OF THE INVENTION

The present invention has been conceived noting the technical problems thus far described, and its object is to provide a hydraulic control system for a wrapping transmission adapted to reduce a speed ratio of the wrapping transmission, in case of rotating the wrapping transmission under the condition where control valves are out of control.

In order to achieve the above-mentioned object, according to the present invention, there is provided a hydraulic control system for a wrapping transmission comprising a pair of rotary members and an annular transmission member applied to the pair of pulleys. Those pulleys are individually provided with a hydraulic chamber to which a hydraulic pressure is applied to narrow a width of a groove holding the transmission member therein. Those hydraulic chambers are connected individually with a hydraulic source through a feeding control valve that is controlled electrically, and with a drain portion through a relief control valve that is controlled electrically. According to the hydraulic control system of the present invention, the hydraulic chambers are disconnected from the hydraulic source and the drain portion in case the feeding control valves and the relief control valves cannot be energized, and the hydraulic control system comprises a communicating passage connecting the hydraulic chambers.

According to the present invention, a normal-open type valve that is normally opens an oil passage unless it is energized is used as the feeding control valve, and a normal-close type valve that is normally close the oil passage unless it is energized is used as the relief control valve. The communicating passage includes a first oil passage for feeding a hydraulic pressure to one of the rotary members from the hydraulic source through one of the feeding control valves, and a second oil passage for feeding a hydraulic pressure to another rotary member from the hydraulic source through another feeding control valves, that is connected with a predetermined portion of the first oil passage between said one of the feeding control valves and the hydraulic source.

The hydraulic control system of the present invention further comprises a hydraulic supply restricting means that restricts the hydraulic pressure supplied from the hydraulic source to the communicating passage.

The hydraulic supply restricting means includes a shutoff valve that disconnects the communicating passage from the hydraulic source in case the feeding control valves and the relief control valves cannot be energized.

In addition, the hydraulic supply restricting means includes a relief valve, which is arranged between the hydraulic source and the communicating passage, and which is adapted to lower an opening pressure thereof to relief the pressure in case the feeding control valves and the relief control valves cannot be energized.

According to the present invention, the rotary member of an input side of said pair of rotary members to which a torque is inputted from a prime mover is connected with a torque reversing mechanism adapted to reverse a direction of the torque inputted to the rotary member of the input side.

Specifically, a belt is used as the transmission member of the present invention. The aforementioned pair of rotary members comprises a drive pulley adapted to vary a width of a groove to which the belt is applied, and a driven pulley adapted to vary a width of a groove to which the belt is applied.

According to the present invention, in the situation where the feeding control valves and the relief control valves cannot be energized, the feeding control valves are opened and the relief control valves are closed. Consequently, the hydraulic chambers of pulleys as the rotary members are hydraulically communicated through the communicating passage, and disconnected from the drain portions. That is, a closed circuit is formed by the hydraulic chambers and the communicating passage, and the hydraulic pressure is confined therein. In this situation, a centrifugal pressure is caused in each hydraulic chamber of the pulleys if the pulleys are rotated. The centrifugal pressure thus caused is raised in accordance with a rotation speed. Therefore, if the centrifugal pressure is caused in the closed circuit under the situation e.g., where the wrapping transmission is halted while setting the maximum speed ratio, the drive pulley is rotated at a speed higher than that of the driven pulley, and an internal pressure of the hydraulic chamber of the drive pulley is thereby raised. As a result, a clamping pressure of the drive pulley clamping the belt functioning as the transmission member is increased to be larger than that of the driven pulley. In this situation, therefore, the groove width of the drive pulley is narrowed gradually while increasing a running radius of the belt in the groove. In this situation, in contrast, the groove width of the driven pulley is widened gradually while reducing the running radius of the belt in the groove. That is, an upshifting is carried out. Thus, even if the control valves cannot be energized and the hydraulic pressure applied to the hydraulic chambers are therefore out of control, an upshifting can be achieved to reduce the rotation speed of the driven pulley (i.e., the rotary member of the input side) by rotating the pulleys of the wrapping transmission.

As described, according to the present invention, the communicating passage is formed by the first oil passage and the second oil passage, and the feeding control valves are arranged on those oil passages. That is, in addition to the above-explained advantage, the wrapping transmission can be enabled to carry out a speed change utilizing existing structure by thus selecting a type (or kind) of the feeding control valves and the relief control valves.

As also described, according to the present invention, an influence of the hydraulic pressure of the hydraulic source on the pressures in hydraulic chambers can be reduced or minimized. Therefore, in addition to the above-explained advantages, the hydraulic pressure applied to the wrapping transmission will not be raised even if the wrapping transmission is rotated under the condition where the hydraulic pressures in the hydraulic chambers of the pulleys cannot be controlled electrically. For this reason, a heat generation in the wrapping transmission and a wearing of the wrapping transmission can be reduced.

Moreover, according to the present invention, a speed of the input side, that is, a rotation speed of the torque reversing mechanism can be reduced in case of rotating the wrapping transmission under the situation where the control valves cannot be energized.

In addition, according to the present invention, the above-explained advantaged may also be achieved even if the present invention is applied to a belt driven continuously variable transmission.

### BRIEF DESCRIPTION OF THE DRAWINGS

Fig. 1 is a partial hydraulic circuit showing an example of the hydraulic control system according to the present invention.
Fig. 2 is a partial hydraulic circuit showing another example of the hydraulic control system according to the present invention.
Fig. 3 is a partial hydraulic circuit showing still another example of the hydraulic control system according to the present invention.
Fig. 4 is a view schematically showing an example of the power train to which the present invention is applied.

### BEST MODE FOR CARRYING OUT THE INVENTION

The hydraulic control system of the present invention is applied to a transmission comprising a pair of rotary members such as pulleys and a transmission member such as a belt applied to those pulleys for transmitting a torque therebetween. The transmission thus structured is adapted to vary a speed ratio by changing a running radius of the belt thus applied to the pulleys. According to the present invention, the transmission member includes not only the above-mentioned belt but also other kinds of ring members such as a chain. Likewise, the rotary member includes not only the above-mentioned pulley but also other kinds of rotary members adapted to vary the speed ratio by changing a running radius of the transmission member such as a sprocket.

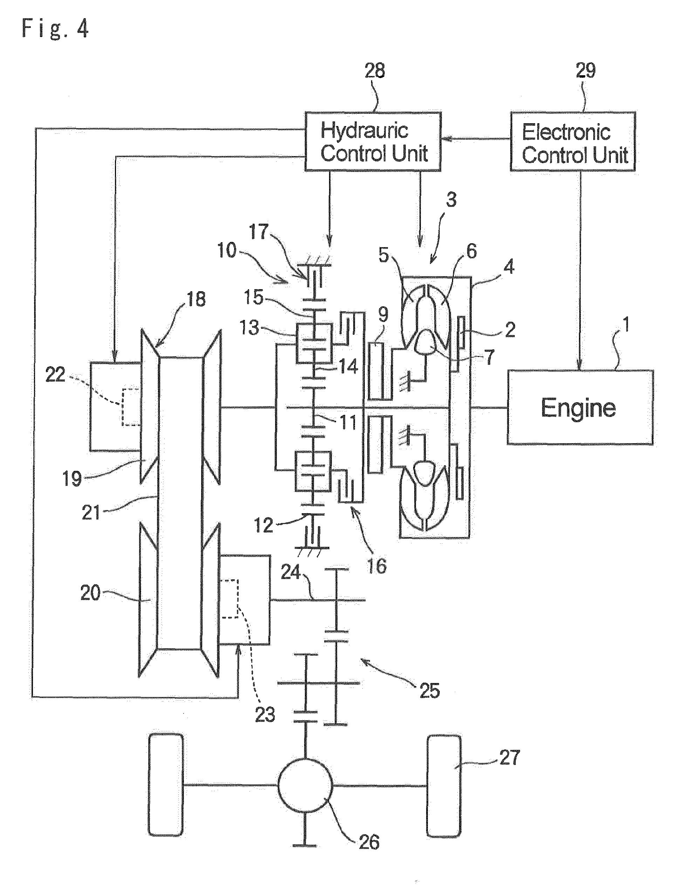

An example of applying the present invention to a belt driven continuously variable transmission will be explained hereinafter. Fig. 4 is a view showing an example of applying the present invention to a vehicle using an internal combustion engine 1 as a prime mover. However, according to the present invention, a motor, and a combination of the motor and the engine may also be used as the prime mover. As shown in Fig. 4, a torque converter 3 having a lock-up clutch 2 is connected with an output side of the engine 1. The torque converter 3 is a conventional one comprising a front cover 4; a pump impeller 5 integrated with the front cover 4; and a turbine runner 6 being opposed to the pump impeller 5 to serve as an output element. In addition, a stator 7 is interposed between the pump impeller 5 and the turbine runner 6, and the stator 7 is adapted to guide the oil from the pump impeller 5 toward the turbine runner 6 by changing a flowing direction of the of the oil under the situation in which a speed ratio of the pump impeller 5 and the turbine runner 6 is small. The stator 7 is fixed to a predetermined fixing portion via a not shown one-way clutch.

The lock-up clutch 2 is an annular member being opposed to an inner face of the front cover 4, and adapted to be rotated integrally with the turbine runner 6. The lock-up clutch 2 thus structured is released from the inner face of the front cover 4 in case an oil pressure between the lock-up clutch 2 and the inner face of the front cover 4 is relatively high. To the contrary, the lock-up clutch 2 is pushed to be engaged with the inner face of the front cover 4 to transmit the torque in case an oil pressure on the opposite side is relatively high.

A torque reversing mechanism 10 adapted to switch a torque direction is connected coaxially with the torque converter 3. Specifically, the torque reversing mechanism 10 outputs a torque without changing a torque direction in case of driving the vehicle in the forward direction, and reverses the torque direction in case of driving the vehicle in the backward direction. In the example shown in Fig. 4, a double-pinion type planetary gear mechanism is used as the torque reversing mechanism 10. As shown in Fig. 4, the torque reversing mechanism 10 comprises: a sun gear 11 as an external gear; a ring gear 12 as an internal gear arranged concentrically with the sun gear 11; a carrier 13; and a plurality of pairs of pinion gears 14 and 15 held by the carrier 13 in a manner to revolve around the sun gear 12 while rotating. The paired pinion gears 14 and 15 mesh with each other, but the pinion gear 14 also mesh with the sun gear 11 and the pinion gear 15 also mesh with the ring gear 12.

The sun gear 11 is connected with the turbine runner 6 of the torque converter 3 through a not shown intermediate shaft. That is, the sun gear 11 serves as an input element. A forward clutch 16 is arranged between the sun gear 11 and the carrier 13. The forward clutch 16 is controlled hydraulically to connect the sun gear 11 and the carrier 13 selectively thereby moving the vehicle in the forward direction. In addition, a reverse brake 17 is provided to selectively halt a rotation of the ring gear 12 thereby moving the vehicle in the backward direction. For example, a wet-type multiple disc clutch actuated hydraulically whose torque capacity is varied according to the oil pressure is used as the forward clutch 16 and the reverse brake 17. That is, the ring gear 12 serves as a reaction element.

A primary pulley (i.e., a drive pulley) 19 of a belt driven continuously variable transmission 18 is arranged coaxially with the torque converter 3 and the torque reversing mechanism 10, and the primary pulley 19 is connected with the carrier 13. That is, the carrier 13 serves as an output element of the planetary gear mechanism. The belt driven continuously variable transmission 18 is a conventional one comprising: the primary pulley 19; a secondary pulley (i.e., a driven pulley) 20 arranged parallel to the primary pulley 19; and a belt 21 applied to those pulleys 19 and 20. Therefore, the torque is transmitted between the pulleys 19 and 20 through the belt 21, and the speed ratio between the pulleys 19 and 20 is varied by changing a running radius of the belt 21.

Specifically, those pulleys 19 and 20 individually comprise a fixed sheave, and a movable sheave allowed to move toward the fixed sheave and away from the fixed sheave. Therefore, a belt groove having a V-shaped cross-section is formed between the fixed sheave and the movable sheave, and the belt 21 is disposed in the belt groove thus formed. The speed ratio of the continuously variable transmission 18 is varied by moving the movable sheave toward the fixed sheave or away from the fixed sheave thereby changing a running radius of the belt 21 in the belt groove. In order to move the movable sheave to vary the speed ratio, and to establish a clamping force to clamp the belt 21 by the pulleys 19 and 20, the pulley 19 is provided with a hydraulic chamber 22 and the pulley 20 is provided with a hydraulic chamber 23. Thus, the torque is transmitted frictionally between the pulley 19 or 20 and the belt 21, therefore, a torque capacity of the belt driven continuously variable transmission 18 is varied according to the oil pressure applied to those pulleys 19 and 20. An output shaft 24 integrated with the secondary pulley 20 is connected with a differential 26 through a counter gear unit 25. Therefore, the power outputted from the belt driven continuously variable transmission 18 is distributed to both wheels 27 from the differential 26.

Thus, in the power train for transmitting the driving force from the engine 1 to the wheel 27, the torque converter 3, the torque reversing mechanism 10 and the belt driven continuously variable transmission 18 are connected in series. In order to control those transmission members, the hydraulic control system is provided with a hydraulic control unit 28. The hydraulic control unit 28 is controlled electrically to output control pressure to those transmission members. For this purpose, the hydraulic control system is further provided with an electronic control unit 29 for outputting a command signal to the hydraulic control unit 28 and to the engine 1.

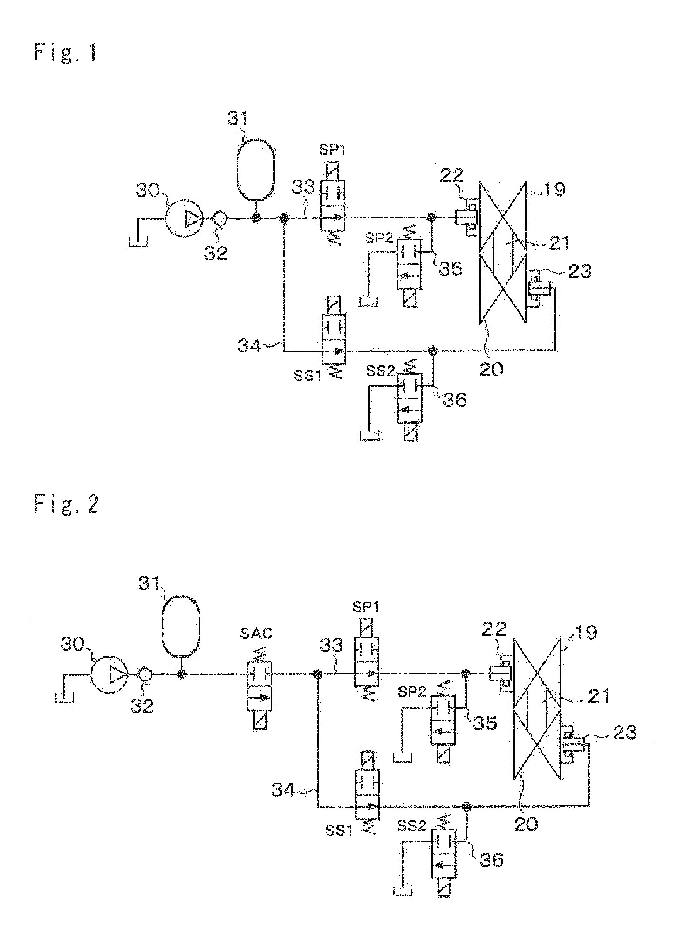

Fig. 1 shows an example of the hydraulic control system of the present invention applied to the belt driven continuously variable transmission thus structured. In the example shown in Fig. 1, a hydraulic pump 30 driven by the engine 1 or a not shown motor to establish hydraulic pressure, and an accumulator 31 for accumulating the pressure established by the oil pump 30 serve as a hydraulic source. A discharging outlet of the hydraulic pump 30 is connected with the accumulator 31 through a check valve 32. Specifically, the check valve 32 is a one-way valve that is opened to allow the operating oil to flow toward the accumulator 30, and that is closed to block the operating oil flowing in the opposite direction. In the accumulator 31, a piston being pushed by an elastic member or an elastic expansive member is arranged in an accumulating chamber. Therefore, a pressure higher than an elastic force of the elastic member or the expansive member is accumulated in the accumulator 31. In addition, a regulator valve (not shown) for regulating the hydraulic pressure from the hydraulic pump 30 or the accumulator 31 to a line pressure may also be arranged in the hydraulic control system according to need.

A feeding control valve SP1 is arranged on a feeding passage 33 connecting the hydraulic source such as the hydraulic pump 30 and the accumulator 31 to the hydraulic chamber 22 of the primary pulley 19. Specifically, the feeding control valve SP1 is a normal-open type solenoid valve comprising a spring pushing a valve element to an opening position, and a magnet coil for establishing an electromagnetic force to push the valve element to a closing position while counteracting to the elastic force of the spring. That is, the feeding control valve SP1 used in the example shown in Fig. 1 is a two-way solenoid valve normally opened by the elastic force of the spring under the condition in which the magnet coil is not energized.

Meanwhile, in order to apply a hydraulic pressure to the hydraulic chamber 23 of the secondary pulley 20, a feeding passage 34 connects the hydraulic source to the hydraulic chamber 23. The feeding passage 34 is branched form the feeding passage 33 for feeding the operating oil from the hydraulic source to the hydraulic chamber 22 of the primary pulley 19, and a feeding control valve SS1 is arranged on the feeding passage 34. As the feeding control valve SP1 of the primary pulley 19 side, the feeding control valve SS1 is also a normal-open type solenoid valve comprising a spring pushing a valve element to an opening position, and a magnet coil for establishing an electromagnetic force to push the valve element to the closing position while counteracting to the elastic force of the spring. Thus, the feeding control valve SS1 used in the example shown in Fig. 1 is also a two-way solenoid valve normally opened by the elastic force of the spring under the condition in which the magnet coil is not energized.

A relief control valve SP2 is arranged on a drain passage 35 connecting the hydraulic chamber 22 of the primary pulley 19 to a drain portion such as an oil pan. Specifically, the relief control valve SP2 is a normal-close type solenoid valve comprising a spring pushing a valve element to a closing position, and a magnet coil for establishing an electromagnetic force to push the valve element to an opening position while counteracting to the elastic force of the spring. That is, the relief control valve SP2 used in the example shown in Fig. 1 is a two-way solenoid valve normally closed by the elastic force of the spring under the condition in which the magnet coil is not energized.

In addition, a relief control valve SS2 is arranged on a drain passage 36 for relieving the hydraulic pressure from the hydraulic chamber 23 of the secondary pulley 20. As the relief control valve SP2 of the primary pulley 19 side, the relief control valve SS2 is also a normal-close type solenoid valve comprising a spring pushing a valve element to a closing position, and a magnet coil for establishing an electromagnetic force to push the valve element to the opening position while counteracting to the elastic force of the spring. Thus, the relief control valve SS2 used in the example shown in Fig. 1 is also a two-way solenoid valve normally closed by the elastic force of the spring under the condition in which the magnet coil is not energized.

Those control valves SP1, SP2, SS1 and SS2 are actuated by the control signal from the aforementioned electronic control unit 29. This means that those control valves SP1, SP2, SS1 and SS2 will not be energized to be activated under the situation e.g., in which a (not shown) main switch of the vehicle on which the belt driven continuously variable transmission 18 is mounted is turned off, or in which an electrical failure occurs in the vehicle. As described, the feeding control valves SP1 and SS1 are the normal-open type solenoid valves. In this situation, therefore, the hydraulic chamber 22 of the pulley 19 and the hydraulic chamber 23 of the pulley 20 are hydraulically communicated with each other through the feeding passages 33 and 34. Thus, the feeding passages 33 and 34, and the feeding control valves SP1 and SS1 serve as the communicating passage of the present invention. In contrast, the relief control valves SP2 and SS2 are the normal-close type solenoid valves basically closed unless being energized. In this situation, therefore, the hydraulic chambers 22 and 23, or the communicating passage connecting the hydraulic chambers 22 and 23 is/are disconnected from the drain portions.

Next, an action of the hydraulic control system shown in Fig. 1 will be explained hereinafter. The hydraulic pump 31 is driven to establish a hydraulic pressure while the engine 1 is running properly to drive the vehicle. The hydraulic pressure thus established by the hydraulic pump 30 is distributed to the feeding passages 33 and 34 while being accumulated in the accumulator 31 depending on situation. The pressure in the feeding passages 33 and 34 is controlled by a primary regulator valve to serve as a line pressure according to an output of the engine 1, or according to a drive demand for the vehicle such as an opening degree of an accelerator. The operating oil is supplied to the hydraulic chamber 22 of the primary pulley 19 by outputting a control signal to the feeding control valve SP1. In this situation, the movable sheave of the primary pulley 19 is pushed toward the fixed sheave against a tension of the belt 21, and a groove width between the movable sheave and the fixed sheave is thereby narrowed. As a result, a running radius of the belt 21 on the primary pulley 19 is increased to reduce the speed ratio, that is, an upshifting is carried out. After thus setting a predetermined speed ratio, the speed ratio can be kept to a constant ratio by outputting the control signal to close the feeding control valve SP1 thereby stopping oil supply to the hydraulic chamber 22 of the primary pulley 19 and confining the operating oil in the hydraulic chamber 22.

The operating oil in the hydraulic chamber 22 of the primary pulley 19 can be drained to the drain portion by opening the relief control valve SP2 by applying a current thereto. When the operating oil in the hydraulic chamber 22 is drained therefrom, the movable sheave of the primary pulley 19 is drawn away from the fixed sheave by the tension of the belt 21. As a result, the groove width between the movable sheave and the fixed sheave is widened, and the running radius of the belt 21 on the primary pulley 19 is reduced. That is, a downshifting is carried out. Thus, the speed change operation is carried out by controlling the operating oil in the hydraulic chamber 22 of the primary pulley 19. Basically, the speed ratio is controlled in a manner to achieve an optimum rotation speed of the engine 1 to improve a fuel economy. If, however, an acceleration is demanded, the speed ratio is transiently controlled in a manner to accelerate the vehicle. To the contrary, in case of decelerating the vehicle, the speed ratio is transiently controlled in a manner to establish an engine braking force. In addition, in case of stopping the running vehicle, the speed ratio is increased to the maximum ratio of the low speed side.

On the other hand, the hydraulic pressure in the hydraulic chamber 23 of the secondary pulley 20 is controlled to establish a clamping force for clamping the belt 21. For example, in case of increasing an output torque of the engine 1 by increasing the opening degree of the accelerator, a control signal to open the feeding control valve SS1 for the secondary pulley 20 is outputted. As a result, the operating oil is supplied from the hydraulic source to the hydraulic chamber 23 of the secondary pulley 20 so that the clamping force of the secondary pulley 20 to clamp the belt 21 is increased. To the contrary, in case of lowering the output torque of the engine 1 by reducing the opening degree of the accelerator, a control signal to open the relief control valve SS2 for the secondary pulley 20 is outputted. As a result, the relief control valve SS2 is opened to drain the operating oil from the hydraulic chamber 23 of the secondary pulley 20 so that the clamping force of the secondary pulley 20 to clamp the belt 21 is reduced. Thus, the hydraulic pressure applied to the hydraulic chamber 23 of the secondary pulley 20, that is, the clamping pressure of the secondary pulley 20 is controlled in accordance with the output torque of the engine 1 or the input torque of the belt driven continuously variable transmission 18.

According to the present invention, the hydraulic control system enables the transmission to carry out a speed change even under the situation where the control valves SP1, SP2, SS1 and SS2 cannot be energized to be actuated. In this situation, specifically, the feeding control valves SP1 and SS1 are opened by the elastic force of the spring so that the hydraulic chamber 22 of the primary pulley 19 and the hydraulic chamber 23 of the secondary pulley 20 are hydraulically communicated with each other through the feeding passages 33 and 34. In contrast, the relief control valves SP2 and SS2 are closed by the elastic force of the spring in this situation so that the hydraulic chamber 22 of the primary pulley 19 and the hydraulic chamber 23 of the secondary pulley 20 are disconnected from the drain portions. However, the feeding passages 33 and 34 are connected with the accumulator 31. In this situation, therefore, the hydraulic pressure from the accumulator 31 is being applied to the hydraulic chambers 22 and 23.

In case the vehicle is stopping, the speed ratio is increased to the maximum ratio. Specifically, the running radius of the belt 21 on the primary pulley 19 is reduced to the minimum radius, and the running radius of the belt 21 on the secondary pulley 20 is increased to the maximum radius. In this situation, if the vehicle is towed under the condition in which a failure occurs on the electronic control unit 29 or the main switch is turned off so that the control valves SP1, SP2, SS1 and SS2 cannot be energized, the belt driven continuously variable transmission 18 is rotated by a torque transmitted from the wheel 27. Specifically, when the secondary pulley 20 is rotated in the above-explained situation by the torque transmitted from the output shaft 24, the torque of the secondary pulley 20 is further transmitted to the primary pulley 19 through the belt 21 to rotate the primary pulley 19. As described, the speed ratio of the belt driven continuously variable transmission 18 is maximized in this situation. Therefore, the primary pulley 19 is rotated at a speed higher than a rotational speed of the secondary pulley 20.

The hydraulic chambers 22 and 23 are individually integrated with the pulleys 19 and 20. Therefore, the hydraulic chamber 22 is rotated together with the primary pulley 19, and the hydraulic chamber 23 is rotated together with the secondary pulley 20. When the hydraulic chambers 22 and 23 are thus rotated, the operating oils in the hydraulic chambers 22 and 23 are centrifugally pressurized. The centrifugal pressure thus caused is raised in proportion to a square value of a rotation speed (or number of rotation) of the pulley. As described, the primary pulley 19 is rotated at a speed higher than the rotational speed of the secondary pulley 20 under the situation in which the speed ratio of the belt driven continuously variable transmission 18 is large. In this situation, therefore, the centrifugal pressure in the hydraulic chamber 22 of the primary pulley 19 is higher than that in the hydraulic chamber 23 of the secondary pulley 20. Consequently, in the primary pulley 19, the movable sheave is pushed toward the fixed sheave thereby increasing the running radius of the belt 21. At the same time, the running radius of the belt 21 in the secondary pulley 20 is reduced while widening the groove width between the movable sheave and the fixed sheave. That is, an upshifting to reduce the speed ratio toward "1" is carried out. As a result, the rotation speed of the primary pulley 19 as an input speed of the belt driven continuously variable transmission 18 is lowered toward the rotation speed of the secondary pulley 20 of the output side. Therefore, the rotation speed of the torque reversing mechanism 10 connected with the primary pulley 19 is lowered so that a gear noise or the like of the torque reversing mechanism 10 is reduced. The above-explained the centrifugal pressure is also caused in the secondary pulley 20. Therefore, in addition to the above-explained advantage, the clamping pressure for clamping the belt 21 by the secondary pulley 20 can be ensured. For this reason, a slippage of the belt 21 can be prevented even in case of towing the vehicle under the situation in which the main switch is turned off.

Thus, the above-explained upshifting and establishment of the clamping pressure are achieved utilizing the centrifugal force under the situation in which the control valves cannot be energized. That is, the hydraulic pressure of the hydraulic source is not involved actively in the above-explained upshifting and establishment of the clamping pressure. Therefore, as shown in Fig. 2, the hydraulic control system may be modified to restrict the hydraulic supply from the hydraulic source to the communicating passage in case of moving or towing the vehicle under the condition in which the control valves SP1, SP2, SS1 and SS2 cannot be energized. In the example shown in Fig. 2, a shutoff valve SAC is interposed between the accumulator 31 and the feeding control valves SP1 and SS1. Specifically, the shutoff valve SAC used in the example shown in Fig. 2 is a normal-close type two-way solenoid valve comprising a spring pushing a valve element to a closing position, and a magnet coil for establishing an electromagnetic force to push the valve element to the opening position while counteracting to the elastic force of the spring. Therefore, the shutoff valve SAC is normally closed by the spring under the condition in which the magnet coil is not energized. One of the ports of the shutoff valve SAC is connected with the hydraulic source such as the accumulator 31 and the hydraulic pump 30, and the other port of the shutoff valve SAC is connected with the above-explained feeding passages 33 and 34. The remaining elements of the example shown in Fig. 2 are identical to those of the example shown in Fig. 1. Therefore, detailed explanation of the elements in common with those in the example shown in Fig. 1 to which common reference numerals are allotted will be omitted.

According to the hydraulic control system shown in Fig. 2, therefore, the shutoff valve SAC is also not energized and closed under the situation in which the control valves SP1, SP2, SS1 and SS2 cannot be energized. That is, the hydraulic pressure of the hydraulic source such as the accumulator 31 will not be applied to the hydraulic chambers 22 and 23 even if the vehicle is moved or towed in this situation. Therefore, the hydraulic pressure in each hydraulic chamber 22 and 23 can be lowered relatively even if the centrifugal pressure is caused therein by thus moving or towing the vehicle. For this reason, a minimal required pressure to clamp the belt 21 can be maintained in case of towing the vehicle and the belt driven continuously variable transmission 18 is thereby being rotated while transmitting the torque. Consequently, a heat generation of the belt 21 can be suppressed, and deterioration in durability of the continuously variable transmission can be prevented.

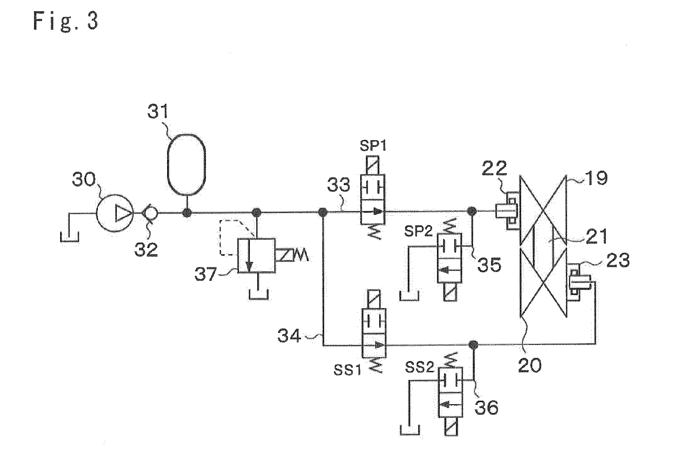

Fig. 3 shows an example in which an electromagnetic relief valve 37 is arranged instead of the shutoff valve SAC used in the example shown in Fig. 2. The electromagnetic relief valve 37 is adapted to raise an opening pressure thereof to relief the pressure therethrough in accordance with an increase in an amount of electricity applied thereto. This means that the opening pressure of the electromagnetic relief valve 37 to relief the pressure is lowered to be lowest under the condition in which the electromagnetic relief valve 37 is not energized. Therefore, according to the example shown in Fig. 3, the pressure in the feeding passages 33 and 34 is restricted to the level to relief the pressure through the electromagnetic relief valve 37. Specifically, in case the control valves SP1, SP2, SS1 and SS2 and the electromagnetic relief valve 37 cannot be energized, the pressure in the feeding passages 33 and 34 is restricted to the lowest pressure level to relief the pressure through the electromagnetic relief valve 37, even if the hydraulic pressure in the accumulator 31 is high. Therefore, as the example shown in Fig. 2, the minimal required pressure to clamp the belt 21 can be achieved in case of towing the vehicle and the belt driven continuously variable transmission 18 is thereby being rotated while transmitting the torque. For this reason, a heat generation of the belt 21 can be suppressed, and deterioration in durability of the continuously variable transmission can be prevented.

In the above-explained examples, the "communicating passage" hydraulically connecting the hydraulic chambers 22 and 23 in case the control valves SP1, SP2, SS1 and SS2 cannot be energized is thus formed utilizing the feeding passages 33 and 34 for feeding the operating oil to the hydraulic chambers 22 and 23 of the pulleys 19 and 20. However, the present invention should not be limited to the above-explained examples. For example, an oil passage connecting the hydraulic chambers 22 and 23 may be arranged in addition to the feeding passages 33 and 34. In this case, an electromagnetic shutoff valve that is closed when energized and opened when it is not energized is arranged on the aforementioned additional oil passage. In addition, another kind of normal-open type valves adapted to be opened unless it is energized may also be used as the feeding control valve instead of the two-way solenoid valve. Likewise, another kind of normal-close type valves adapted to be closed unless it is energized may also be used as the relief control valve instead of the two-way solenoid valve. Further, the present invention may also be applied to a transmission other than the belt driven continuously variable transmission. For example, the present invention may also be applied to a transmission adapted to change a running radius of a chain applied to a rotary member such as a sprocket.

## Claims

1. A hydraulic control system for a wrapping transmission, comprising:
a pair of rotary members;
an annular transmission member applied to a pair of pulleys;
a hydraulic chamber, which is formed individually on the pulleys and to which a hydraulic pressure is applied to narrow a width of a groove holding the transmission member therein;
wherein each of the hydraulic chambers is connected with a hydraulic source through a feeding control valve that is controlled electrically; and
wherein each of the hydraulic chambers is connected with a drain portion through a relief control valve that is controlled electrically;
**characterized in that**:
each of the hydraulic chambers is disconnected from the hydraulic source and the drain portion in case none of the feeding control valves and the relief control valves can be energized; and
the hydraulic control system comprises a communicating passage connecting the hydraulic chambers.

2. The hydraulic control system for a wrapping transmission as claimed in claim 1, wherein:
the feeding control valve includes a normal-open type valve that is normally opens an oil passage when it is not energized;
the relief control valve includes a normal-close type valve that is normally close the oil passage when it is not energized; and
the communicating passage includes
a first oil passage for feeding a hydraulic pressure to one of the rotary members from the hydraulic source through one of the feeding control valves, and
a second oil passage for feeding a hydraulic pressure to another rotary member from the hydraulic source through another feeding control valves, that is connected with a predetermined portion of the first oil passage between said one of the feeding control valves and the hydraulic source.

3. The hydraulic control system for a wrapping transmission as claimed in claim 1 or 2, further comprising:
a hydraulic supply restricting means that restricts the hydraulic pressure supplied from the hydraulic source to the communicating passage.

4. The hydraulic control system for a wrapping transmission as claimed in claim 3,
wherein the hydraulic supply restricting means includes a shutoff valve that disconnects the communicating passage from the hydraulic source in case the feeding control valves and the relief control valves cannot be energized.

5. The hydraulic control system for a wrapping transmission as claimed in claim 3,
wherein the hydraulic supply restricting means includes a relief valve, which is arranged between the hydraulic source and the communicating passage, and which is adapted to lower an opening pressure thereof to relief the pressure in case the feeding control valves and the relief control valves cannot be energized.

6. The hydraulic control system for a wrapping transmission as claimed in any of claims 1 to 5,
wherein the rotary member of an input side of said pair of rotary members to which a torque is inputted from a prime mover is connected with a torque reversing mechanism adapted to reverse a direction of the torque inputted to the rotary member of the input side.

7. The hydraulic control system for a wrapping transmission as claimed in any of claims 1 to 6,
wherein the transmission member includes a belt; and
wherein said pair of rotary members include a drive pulley adapted to vary a width of a groove to which the belt is applied, and a driven pulley adapted to vary a width of a groove to which the belt is applied.
